(19) Europäisches Patentamt
European Patent Office
Office européen des brevets

(11) EP 4 741 570 A2

(12) DEMANDE DE BREVET EUROPEEN

(43) Date de publication:
**13.05.2026 Bulletin 2026/20**

(21) Numéro de dépôt: **26158390.0**

(22) Date de dépôt: **05.09.2019**

(51) Classification Internationale des Brevets (IPC):
***D21H 17/31*** *(2006.01)*

(52) Classification Coopérative des Brevets (CPC):
(C-Sets disponibles)
**C08B 37/0057; C08B 11/08; C08B 37/0024; C08B 37/003; C08B 37/0087; C08B 37/0093; C08B 37/0096; C08L 1/02; C08L 5/00; C08L 5/14; D21H 17/24; D21H 17/31; D21H 21/18** (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **07.09.2018 FR 1858068**

(62) Numéro(s) de document de la (des) demande(s) initiale(s) en application de l'article 76 CBE:
**19762179.0 / 3 847 198**

(27) Demande déposée antérieurement:
**05.09.2019 EP PCT/EP2019/073742**

(71) Demandeur: **Centre National de la Recherche Scientifique**
**75016 Paris (FR)**

(72) Inventeurs:
- **GAFFIOT, Lauric**
**38000 GRENOBLE (FR)**
- **HEUX, Laurent**
**38410 SAINT MARTIN D'URIAGE (FR)**

(74) Mandataire: **Santarelli**
**Tour Trinity**
**1 bis Place de la Défense**
**92400 Courbevoie (FR)**

Remarques:
Cette demande a été déposée le 13-02-2026 comme demande divisionnaire de la demande mentionnée sous le code INID 62.

# (54) FONCTIONNALISATION ET RENFORCEMENT A L'ETAT SEC ET A L'ETAT HUMIDE D'UN MATERIAU CELLULOSIQUE PAR UN POLYSACCHARIDE OXYDE

(57) L'invention concerne des composés, notamment à base de polysaccharides s'adsorbant sur un matériau cellulosique. La présente invention concerne en particulier l'application de tels composés à titre d'agent de renforcement de matériaux cellulosiques, à l'état humide et/ou sec.

L'invention concerne des composés comprenant une association d'au moins un polysaccharide adsorbé sur un matériau cellulosique, ledit polysaccharide comprenant au moins deux unités monosaccharides différentes, formant des premières et deuxièmes unités monosaccharides, lesdites deuxièmes unités monosaccharides étant ramifiées sur une chaîne comprenant au moins lesdites premières unités monosaccharides, au moins certaines des deuxièmes unités monosaccharides étant non cycliques et porteuses de fonctions aldéhydes, lesdites fonctions aldéhydes formant possiblement des fonctions hémiacétales avec des fonctions hydroxy du matériau cellulosique.

EP 4 741 570 A2

(52) Classification Coopérative des Brevets (CPC):
(Cont.)

C-Sets
**C08L 1/02, C08L 5/00;**
**C08L 1/02, C08L 5/14;**
**C08L 5/00, C08L 1/02;**
**C08L 5/14, C08L 1/02**

## Description

La présente invention concerne des composés, notamment à base de polysaccharides s'adsorbant sur un matériau cellulosique. La présente invention concerne en particulier l'application de tels composés à titre d'agent de renforcement de matériaux cellulosiques, à l'état humide et/ou sec.

## Etat de la technique

Une des problématiques techniques est de développer des agents de renforcement simples d'utilisation, en particulier au niveau industriel, et de préférence peu coûteux. Les matériaux cellulosiques, comme typiquement les fibres papetières ou les fibres textiles sont très largement utilisés dans de nombreuses applications (papiers et cartons pour emballage, impression graphique, papiers de spécialité, renfort pour composite, ...). Dans de nombreuses applications, la sensibilité à l'eau de ces matériaux est un frein majeur à leur utilisation, bien que leur caractère biorenouvelble les rendent attractifs d'un point de vue développement durable. De nombreux additifs ont déjà été développés par le passé pour donner aux matériaux cellulosiques traités une Résitance à l'Etat Humide, ou REH.

Les solutions préconisées dans l'état de la technique requièrent en général des procédés spécifiques et plus ou moins complexes faisant appel en grande majorité à des composés issus de la pétrochimie et dont la toxicité est reconnue (glyoxal, formaldéhyde, épichlorhydrine, etc.).

Par ailleurs en général, les additifs ou agents de renforcement utilisés présentent soit des propriétés de renforcement de la résistance de matériaux cellulosiques à l'état sec, soit à l'état humide. Mais il est peu aisé d'identifier des agents de renforcement de la résistance des matériaux cellulosiques à la fois à l'état humide et à l'état sec. L'état de la technique utilise en général des additifs différents pour remplir ces deux fonctions techniques. Il existe donc un intérêt de développer de nouveaux agents de renforcement afin de surmonter ce problème technique.

En outre, les produits existants, issus de la pétrochimie sont en général toxiques ou soupçonnés de l'être. Pour contourner cette difficulté, les dosages sont réduits et/ou contraignent l'utilisation commerciale de ces produits.

En général pour les applications dans lesquelles les agents de renforcement doivent être efficaces à l'état humide, les solutions proposées actuellement ne sont pas satisfaisantes, en particulier car le renforcement nécessite l'emploi de produits toxiques et des procédés lourds ou des matériaux à architecture complexe et/ou comprenant des feuilles d'aluminium ou de plastique. Souvent l'industriel préférera un matériau plastique, ce qui est regrettable.

On connait du brevet US 3,205,125 un procédé de formation de papier, comprenant une étape d'ajout à la pâte à papier avant la formation de feuilles de 0,1 à 5 % d'une gomme de polygalactomannane oxydée, l'agent oxydant étant l'acide périodique ou ses sels de métaux alcalins et étant employé en une quantité de 0,01 à 0,4 mole par unité hexose anhydre.

On connait aussi du brevet US 5,554,745 des dérivés de polysaccharides contenant du galactose contenant des aldéhydes cationiques obtenus par oxydation avec une enzyme galactose oxydase. Les produits oxydés par l'enzyme ont une fonction aldéhyde à une position spécifique du polysaccharide, c'est-à-dire la position C6, de l'unité galactose. Ces dérivés cationiques sont utilisés comme additifs de résistance du papier.

## Buts de l'invention

Il a été découvert par les inventeurs qu'un composé selon la présente invention permet de résoudre au moins un, et de préférence l'ensemble des problèmes techniques évoqués dans la présente invention.

La présente invention a notamment pour but de résoudre le problème technique consistant à fournir un nouveau composé pouvant servir d'agent de renforcement d'un matériau cellulosique, en particulier de renforcement de la résistance du matériau cellulosique à l'état sec et/ou humide.

La présente invention a pour but de résoudre le problème technique consistant à fournir un matériau cellulosique résistant en particulier à l'état humide, et de préférence à l'état sec et humide.

La présente invention a pour but de résoudre le problème technique consistant à fournir un procédé permettant la préparation contrôlée d'un tel composé.

La présente invention a notamment pour but de résoudre le problème technique consistant à fournir un tel composé, son procédé de préparation de manières respectueuses de l'environnement, et en particulier d'utiliser des composés d'origine naturelle et de limiter l'utilisation de matériaux toxiques.

La présente invention a pour but de résoudre les problèmes techniques de manière industrielle, fiable, et de préférence peu coûteuse sans modification du procédé existant.

## Description de l'invention

En particulier, la présente invention concerne la préparation de composés polysaccharides, leur complexation

avec un matériau cellulosique et leurs applications, en particulier à titre d'agents de renforcement de la résistance de matériaux cellulosiques, à l'état sec et/ou humide.

La présente invention concerne un composé comprenant une association d'au moins un polysaccharide adsorbé sur un matériau cellulosique, ledit polysaccharide comprenant au moins deux unités monosaccharides différentes, formant des premières et deuxièmes unités monosaccharides, lesdites deuxièmes unités monosaccharides étant ramifiées sur une chaine comprenant au moins lesdites premières unités monosaccharides, au moins certaines des deuxièmes unités monosaccharides étant non cycliques et porteuses de fonctions aldéhydes, lesdites fonctions aldéhydes formant possiblement des fonctions hémiacétales avec des fonctions hydroxy du matériau cellulosique.

Selon un mode de réalisation, le polysaccharide comprend une chaine avec des liaisons 1-4 glucanes, et de préférence des liaisons glucanes $\beta(1\rightarrow4)$.

Selon un mode de réalisation, les monosaccharides ramifiés sont des xyloses, et de préférence des ramifications de xylose $\alpha(1\rightarrow6)$.

Selon un mode de réalisation, les monosaccharides ramifiés non cycliques porteurs de fonctions aldéhydes sont des xyloses oxydés.

Selon un mode de réalisation, le polysaccharide adsorbé comprend une chaine de glucanes, une chaine de mannanes et/ou une chaine de xylanes.

Selon un mode de réalisation, le polysaccharide adsorbé est choisi parmi le groupe consistant en un xyloglucane, un glucomannane, un mannane et un galactomannane.

Selon un mode de réalisation, le polysaccharide adsorbé est choisi parmi le groupe consistant en un xyloglucane de graine de tamarin (TXG), un xyloglucane de pois, un galactomannane à faible galactose, une gomme guar modifiée enzymatiquement (emg), une gomme tara, une gomme de casse (ou gomme cassia), une gomme de caroube et l'un quelconque de leurs mélanges.

Selon un mode de réalisation, le polysaccharide adsorbé est un xyloglucane. Selon l'invention, on préfère le xyloglucane.

Les inventeurs ont découverts que cette hémicellulose, qui s'adsorbe sur un matériau cellulosique, et en particulier sur la cellulose, par exemple le xyloglucane extrait du tamarin (en particulier des graines), une fois oxydée, présente toujours la propriété de s'adsorber sur le matériau cellulosique et forme après séchage des liaisons hémiacétales avec le matériau cellulosique, conférant au matériau des propriétés intéressantes. Cette molécule soluble dans l'eau présente une structure ramifiée décrite figure 1, avec un squelette d'unités D-glucopyranoses liées entre elles par des liaisons $\beta1\rightarrow4$ et ramifiées. En moyenne, 3 unités sur 4 sont substituées en position O6 par des chaines de D-xylose. Ces dernières peuvent être également substituées en position O2 et former des chaines latérales avec du galactose, du fucose et/ou de l'arabinose (figure 1).

On peut également utiliser dans la présente invention à titre de polysaccharide d'autres hémicelluloses oxydées s'adsorbant sur un matériau cellulosique telles que le xylane, le galactomannane, ou le glucogalactomanan possédant aussi des chaînes latérales oxydables.

La nature et la distribution de ces chaînes latérales varie selon les tissus et espèces végétales. Le xyloglucane issu des graines de tamarin, utilisé selon l'invention, présente généralement un taux de galactosylation d'environ 85 % (en général de 80 à 90%).

Le procédé de préparation d'un composé selon l'invention comprend une oxydation du polysaccharide, avantageusement par le periodate ou tout autre réactif permettant d'obtenir le clivage dela liaison C2-C3 et produire jusqu'à 2 aldéhydes par sucre.

La quantité d'aldéhyde formée varie avantageusement selon la cinétique et/ou la quantité d'oxydant introduite. Cela se traduit par le pourcentage d'oxydation, la grandeur qui caractérise l'avancement de la réaction, dont la mesure est détaillée dans l'invention.

De préférence, on oxyde le polysaccharide par un agent oxydant. De préférence, le polysaccharide est oxydé par un periodate, et de préférence le métapériodate de sodium.

Dans la présente invention Xg signifie le xyloglucan et XgOx le xyloglucan oxydé.

Le polysaccharide est de préférence solubilisé avant oxydation, mais pêut être également oxydé sous forme de « boue » connue sous le nom de « slurry »qui est est un mélange de polymère et d'eau sous forme de pâte très concentrée . La solubilisation a de préférence lieu dans une phase aqueuse et de préférence encore dans de l'eau comme unique solvant.

Le protocole d'oxydation est de préférence le suivant, par exemple en référence au xyloglucane :

Le xyloglucane est solubilisé dans de l'eau déionisée à l'aide d'une agitation mécanique défloculeuse. Les concentrations sont fixées par pesées entre 0,1 et 2% selon les essais. Le métapériodate est ensuite ajouté en solution concentrée, et la réaction est conduite pendant 1 nuit. Le milieu réactionnel est ensuite purifié par dialyse.

La réaction peut être par exemple caractérisée avantageusement par son pourcentage d'oxydation. On utilise selon la présente invention un dosage par formation d'oxime :

La quantité d'aldéhyde formé est mesurée par dosage à l'oxime. La quantité de Xg oxydé équivalente à une masse sèche

de 0,1g est pesée et placée dans un bécher de 100 mL. 25mL d'une solution de $NH_2OH,HCl$ à 0,25M ,dont le pH aura été préalablement mesuré, sont ajoutés. La réaction est conduite 2h sous agitation et à température ambiante. Un précipité blanc apparaît (formation de l'oxime). La solution est ensuite titrée avec de la soude à 0,02M, l'équivalence correspondant au retour au pH initial de la solution de $NH_2OH,HCl$.

Avec le volume de soude, le pourcentage d'oxydation est calculé selon l'équation 1 :

*Equation 1 : calcul du pourcentage d'oxydation par dosage par formation d'oxime*

$$\%Ox = \frac{V_{NaOH} \times C_{NaOH} \times M_{XG}}{m_{Xgoxs}} / 18$$

Avec $M_{Xg}$ = 1350g/mol (masse molaire d'une unite de Xg), $V_{NaOH}$ = volume équivalent de soude, $C_{NaOH}$ = concentration exacte de la solution de soude et $m_{Xgoxs}$ = masse sèche de XgOx introduit.

Selon un mode de réalisation on préfère un polysaccharide présentant un pourcentage d'oxydation supérieur à 0% et inférieur ou égal à 50%, et de préférence inférieur ou égal à 40%, et de préférence encore inférieur ou égal à 30%, exprimé en nombre d'unités saccharides oxydées sur le nombre total d'unités saccharidiques.

La notation suivante sera adoptée dans la suite du présent document : abréviation du polysaccharide oxydé du type « Ox(%Oxydation) », de telle sorte qu'un xyloglucane oxydé à 20% sera noté XgOx20, ou une gum de guar oxydé à 30% sera noté GOx30, ou une gomme de caroube (« locust beam gum ») oxydée à 63% sera notée LOx63.

De préférence le pourcentage d'oxydation est supérieur à 0 et inférieur à 40%, et de préférence inférieur à 20%, les pourcentages sont exprimés comme la quantité d'unités saccharidiques oxydées sur la quantité totale d'unités saccharidiques). Dans le cas du xyloglucane de Tamarin, le pourcentage d'oxydation correspond par exemple à 0 à 0.5 mol d'aldéhyde/100g de polysaccharide.

Avantageusement, le pourcentage d'oxydation influence la capacité d'adsorption d'une part, et la densité de réticulation d'autre part.

Selon une variante, le polysaccharide est lié de manière covalente au matériau cellulosique par des fonctions hémiacétals entre des fonctions aldéhydes de monosaccharides ramifiés et des fonctions hydroxy du matériau cellulosique.

Selon une variante, le polysaccharide est lié en outre de manière covalente par une ou plusieurs molécules réactives réagissant avec des fonctions aldéhydes du polysaccharide, lesdites molécules réactives étant par exemple sélectionnées dans le groupe comprenant des amines, polyamines, hydroxylamines, imines, hydrazide et l'une quelconque de leurs combinaisons.

Avantageusement, le polysaccharide est lié en outre de manière covalente par au moins deux molécules réactives réagissant avec des fonctions aldéhydes du polysaccharide, lesdites molécules réactives étant par exemple sélectionnées dans le groupe comprenant des amines, polyamines, hydroxylamines, imines, hydrazide et l'une quelconque de leurs combinaisons.

L'invention concerne également une méthode consistant à laisser s'adsorber un polysaccharide oxydé et réactif sur un matériau cellulosique (ou inversement), ladite méthode comprenant l'oxydation contrôlée d'un polysaccharide comprenant au moins deux unités monosaccharides différentes, formant des premières et deuxièmes unités monosaccharides, lesdites deuxièmes unités monosaccharides étant ramifiées sur une chaine comprenant au moins lesdites premières unités monosaccharides, au moins certaines des deuxièmes unités monosaccharides étant non cycliques et porteuses de fonctions aldéhydes, lesdites fonctions aldéhydes formant possiblement des fonctions hémiacétales avec des fonctions hydroxy du matériau cellulosique, et la mise en contact du polysaccharide oxydé avec un matériau cellulosique pour former un composé selon l'invention, formant avantageusement un complexe d'un matériau cellulosique avec un polysaccharide oxydé.

L'invention concerne également une méthode pour lier de manière covalente un matériau cellulosique à un polysaccharide, ladite méthode comprenant l'adsorption d'un polysaccharide sur un matériau cellulosique pour former un composé selon la présente invention et la réaction de fonctions aldéhyde du polysaccharide avec des fonctions hydroxy du matériau cellulosique pour former des fonctions hémiacétales.

Selon une variante, l'étape d'oxydation est réalisée en milieu aqueux en solution ou en slurry sous forme de pâte concentrée.

Selon un mode de réalisation, la méthode comprend préalablement à l'adsorption du polysaccharide sur le matériau cellulosique une étape d'oxydation d'un polysaccharide précurseur du polysaccharide adsorbable sur le matériau cellulosique.

Selon un mode de réalisation, l'étape d'oxydation est contrôlée pour oxyder uniquement les ramifications du polysaccharide.

Avantageusement, la méthode selon l'invention est mise en œuvre dans des conditions conservant les propriétés d'adsorption du matériau cellulosique et du polysaccharide oxydé.

Avantageusement, la méthode selon l'invention est mise en œuvre dans des conditions conservant au mieux la masse molaire du polysaccharide.

Selon une variante, la masse molaire en masse du polysaccharide va de 20 à 700 kDa (Mw).

Selon une variante, la masse molaire en masse du polysaccharide va de 70 à 700 kDa (Mw).

Selon une variante, la masse molaire en masse du polysaccharide va de 100 à 500 kDa (Mw) et par exemple de 100 à 400 kDa (Mw).

Selon un mode de réalisation, l'adsorption est réalisée avec le matériau cellulosique en milieu aqueux.

L'invention concerne aussi une méthode dans laquelle un composé selon l'invention est mis en forme et séché sous forme de papiers, fibres, non tissés, autres. (Le séchage permet la stabilisation de la réticulation par les liaisons hémiacétals.)

L'adsorption du polysaccharide est une propriété clef pour l'application d'additif de renforcement. La présente invention supporte le lien entre oxydation et adsorption sur un matériau cellulosique, et en particulier la cellulose. Si l'oxydation est trop importante alors l'adsorption ne se fait plus. Avantageusement, on cherche à conserver la séquence osidique de la chaine principale (« backbone ») du polysaccharide lors de l'oxydation pour interagir suffisamment avec le matériau cellulosique pour s'adsorber. Cette adsorption permet ensuite, avantageusement, la fixation du polysaccharide par le biais des liaisons hémiacétals entre le matériau cellulosique et les aldéhydes apportés par l'oxydation formé lors du séchage du matériau cellulosique.

Selon un mode de réalisation, polysaccharide est lié de manière covalente au substrat cellulosique est mis à réagir avec une ou plusieurs molécules réactives réagissant avec des fonctions aldéhydes du polysaccharide, lesdites molécules réactives étant par exemple sélectionnée dans le groupe comprenant des amines, polyamines, hydroxylamines, imines, hydrazide et l'une quelconque de leurs combinaisons.

Parmi les matériaux cellulosiques, on peut citer en particulier les fibres de cellulose, et notamment les fibres textiles comme les fibres de lin, de chanvre, jute, kénaf, les pâtes à papier, en particulier la pâte kraft, la pâte sulfite ou les linters de coton, des nanocelluloses par exemple des nanofibrilles de cellulose (ou NFC) ou des nanocristaux de cellulose (ou CNC)Selon une variante, le polysaccharide oxydé selon l'invention est ajouté à une concentration massique de 0,001 % à 1 %, de préférence de 0,001 % à 0,5 %, et encore de préférence de 0,001 % à 0,2%, dans la suspension fibreuse à traiter, c'est-à-dire typiquement à renforcer.

Selon une variante, le polysaccharide oxydé est ajouté en spray ou par déposition sur le produit déjà formé avant séchage, ou sur le produit déjà séché avec une étape de séchage supplémentaire.

Selon une autre variante, un produit réactif possédant une fonction chimique susceptible de réagir avec les aldéhydes peut être ajouté pour augmenter la résistance à l'état humide ou à l'état sec, ou apporter des fonctionnalités au matériau cellulosique comme un caractère antiseptique, antioxydant ou une coloration spécifique. Le réactif peut être pris dans le groupe des amines, polyamines, hydoryxlamine, imines, hydrazide ou tout autre composé susceptible de réagir avec les fonctions aldéhydes restantes.

Avantageusement, on peut ajouter un composé selon la présente invention à différents stades de la préparation de la pâte à papier. Schématiquement, comme illustré à la figure 8, un procédé de fabrication du papier peut comprendre lors d'une des étapes 10 de raffinage ou battage de pâte à papier à l'aide de raffineurs ou de batteurs, 20 de mélange de la pâte raffinée dans le cas où il y a plus d'une alimentations de pâte à papier, 30 de l'ajout de produits chimiques pour obtenir le produit désiré de papier ou carton, 40 de transfert de la pâte à papier ou carton préparée à la machine de préparation du papier, 50 de fabrication du papier à partir de la pâte à papier préparée « section humide » (ou « wet end » en anglais).

On peut par exemple ajouter un composé selon la présente invention à l'une ou plusieurs de ces étapes et en particulier aux étapes 10, 20, 30 ou 40. Ou encore à la pâte préparée avant la préparation à proprement parler de la pâte en papier appelé en générale « section humide » (ou « wet end » en anglais).

Ainsi, selon une variante, un composé selon la présente invention est ajouté lors de la préparation de la pâte (« stock preparation » en anglais).

Selon une autre variante, un composé selon la présente invention est ajouté lors de la section humide (ou « wet end » en anglais).

Avantageusement, les procédés existant n'ont pas besoin d'être modifiés pour qu'un composé selon la présente invention soit ajouté. On parle d'ajout à isoprocédé.

L'invention concerne aussi l'utilisation d'un polysaccharide à titre d'additif de renforcement d'un matériau cellulosique comprenant des fonctions hydroxy, ledit polysaccharide comprenant des monosaccharides ramifiés non cycliques porteurs de fonctions aldéhydes, dans lequel des fonctions aldéhydes forment possiblement des fonctions hémiacétales avec des fonctions hydroxy du matériau cellulosique, ledit polysaccharide étant susceptible de s'adsorber sur le matériau cellulosique, et de préférence pour former un composé défini selon la présente invention.

Selon une variante, le polysaccharide est utilisé à titre d'additif de renforcement de la résistance à l'état humide d'un matériau cellulosique comprenant des fonctions hydroxy.

Selon une variante, le polysaccharide est utilisé à titre d'additif de renforcement de la résistance à l'état sec, et de préférence à l'état sec et humide, d'un matériau cellulosique comprenant des fonctions hydroxy.

L'invention concerne aussi l'utilisation d'une ou plusieurs molécules réactives réagissant avec des fonctions aldéhydes du composé tel que défini selon l'invention, pour apporter une nouvelle fonctionnalité au composé, par exemple antiseptique, coloration, et/ou augmenter les propriétés mécaniques du matériau ainsi formé, lesdites molécules réactives étant par exemple sélectionnées dans le groupe comprenant des amines, polyamines, hydroxylamines, imines, hydrazide et l'une quelconque de leurs combinaisons.

Sur les figures :

La figure 1 représente une structure ramifiée d'un composé de l'invention avec un squelette d'unités D-glucopyranoses liées entre elles par des liaisons $\beta1\rightarrow4$ et ramifiées ;
La figure 2 représente le rendement massique de la réaction selon l'exemple 2 pour différents pourcentages d'oxydation sur 1,42 g de xyloglucane en solution à 0,8%;
La figure 3 représente l'évolution de l'adsorption de Xyloglucane oxydé en fonction de son degré d'oxydation pour des proportions massiques de xyloglucane et celluloses en solution à 0,2% de 1 pour 1 (•) et 1 pour 3 ($\Delta$);
La figure 4 représente l'influence de la proportion en xyloglucane (blanc), XgOx11 (gris) et XgOx23 (hachuré) sur la contrainte ultime de films de NFC ;
La figure 5 représente l'influence de la proportion en xyloglucane (blanc), XgOx11 (gris) et XgOx23 (hachuré) sur la contrainte ultime de films de NFC humides ;
La figure 6 montre l'influence de la proportion massique en xyloglucane (blanc) et XgOx12 (gris) et XgOx23 (hachuré) sur la contrainte ultime de films de NFC post traités dans une solution d'hydrazide adipique à 0.3% en masse.
La figure 7 représente la contrainte ultime des films de NFC et xyloglucane (blanc, colonne de gauche), XgOx12 (hachuré, deuxième colonne en partant de gauche) et XgOx23 sans (gris, troisième colonne en partant de gauche) et avec post traitement (hachuré, colonne de droite) par le dihydrazide adipique, pour différentes constitutions ;
La figure 8 représente schématique un procédé de fabrication de papier ou carton.

D'autres buts, caractéristiques et avantages de l'invention apparaîtront clairement à l'homme de l'art suite à la lecture de la description explicative qui fait référence à des exemples qui sont donnés seulement à titre d'illustration et qui ne sauraient en aucune façon limiter la portée de l'invention.

Les exemples font partie intégrante de la présente invention et toute caractéristique apparaissant nouvelle par rapport à un état de la technique antérieure quelconque à partir de la description prise dans son ensemble, incluant les exemples, fait partie intégrante de l'invention dans sa fonction et dans sa généralité.

Ainsi, chaque exemple a une portée générale.

D'autre part, dans les exemples, tous les pourcentages sont donnés en poids, sauf indication contraire, et la température est exprimée en degré Celsius sauf indication contraire, et la pression est la pression atmosphérique, sauf indication contraire.

Les pourcentages d'oxydation de xyloglucane indiqués dans les exemples sont évalués par le dosage par formation d'oxime.

## EXEMPLES

Exemple 1 : préparation d'un XgOx

1.1. Oxydation du Xyloglucane.

| *Matériel :* | *Matières Premières :* |
|---|---|
| - 2 béchers de 1L. | - 10g de Xyloglucane de tamarin. |
| - Balance. | - Qté suffisante de NalO4. |
| - 2 agitateurs magnétiques. | - Environ 650mL d'eau distillée. |
| - Plaque magnétique. | |

*Mode Opératoire :*

- Peser environ 10g de Xyloglucane de tamarin dans un bécher de 1L
- Dans un bécher de 1L, peser l'équivalent voulu de periodate de sodium, et le solubiliser sous agitation dans environ 650mL d'eau distillée.
- Verser la solution de periodate solubilisé dans le bécher contenant le xyloglucane,
- Agiter le bécher (environ 700 rpm), jusqu'à ce que le mélange ne devienne pas trop visqueux et que l'agitateur ne tourne plus.
- Recouvrir le bécher d'un parafilm et le laisser reposer toute une nuit.

### 1.2. Purification de la solution

*Principe :*

Pour la purification de la solution, on effectue une dialyse qui permet aux sels et petites molécules de passer à travers une membrane et d'aller dans la bassine d'eau. Il faut donc changer l'eau souvent car, lorsque l'équilibre entre les ions dans la solution et l'eau pure est atteint, il n'a plus de purification.

La dialyse est terminée quand la conductivité de l'eau est inférieure à 10$\mu$S/cm.

On récupère ainsi un xyloglucane oxydé purifié.

### Exemple 2 : Influence de l'oxydation sur le xyloglucane oxydé

*Rendements*

Le rendement massique de la réaction a été étudié pour différents pourcentages d'oxydation sur 1,42 g de xyloglucane en solution à 0,8%. La masse finale a été calculée après dialyse par gravimétrie, les résultats sont présentés figure 2. La réaction a un bon rendement d'environ 95% pour des taux d'oxydation modérés allant jusqu'à environ 30%. La faible perte de matière est dans ce cas le résultat des différentes phases de manipulation. En revanche, pour des taux d'oxydation supérieurs, le rendement subit une décroissance, puisqu'il chute à 82% pour un pourcentage d'oxydation de 49%, puis à 77.5% pour une oxydation de 62%. La perte de matière s'explique ici par la purification en dialyse. Le seuil de coupure du matériel utilisé est de 14000 g/mol. Ainsi, après ruptures de chaines, une quantité importante de matière de masse molaire inférieure peut être évacuée. Ces phénomènes seront étudiés dans les paragraphes suivants.

*Les masses moléculaires*

L'oxydation des polysaccharides s'accompagnent systématiquement d'une chute de la masse molaire. L'oxydation a été réalisée sur 1 g de xyloglucane en solution à 0,4%. Différents pourcentages d'oxydation ont été réalisés, et les masses molaires des produits obtenus ont été contrôlées. Les résultats mesurés sont mis en évidence dans le tableau 1.

*Tableau 1 : Evolution de la masse molaire en masse (Mw), en nombre (Mn) et de l'indice de polydispersité (Ip) du Xg en fonction du taux d'oxydation*

| | Mw (kDa) | Mn (kDa) | Ip |
|---|---|---|---|
| Xyloglucane | 863 ± 5,4 | 652 ± 15,9 | 1,32 ± 0,03 |
| XgOx9 | 376 ± 1,9 | 283 ± 4,9 | 1,33 ± 0,02 |
| XgOx21 | 130 ± 1,8 | 99 ± 1,4 | 1,31 ± 0,02 |
| XgOx30 | 155 ± 2,5 | 108 ± 1,3 | 1,44 ±0,007 |
| XgOx46 | 133 ± 4,8 | 103 ± 4,4 | 1,29 ± 0,01 |
| XgOx59 | 28 ± 1,1 | 23 ± 1,0 | 1,25 ± 0,01 |

L'oxydation peut avoir un impact significatif sur la masse molaire du polysaccharide.

Par exemple, dans les conditions de préparation selon l'exemple 1, à un pourcentage d'oxydation de 10%, la masse molaire est modifiée de manière importante puisqu'elle est divisée par 2. Elle diminue encore d'un facteur 2 à 20% d'oxydation, puis semble se stabiliser jusqu'à environ 50%. Elle chute cependant à 23 kDa à 60% d'oxydation, soit juste 2 fois la valeur du seuil de coupure des membranes utilisées lors des purifications qui est de 14 kDa. Cette dernière chute intervient à un pourcentage d'oxydation qui implique nécessairement l'oxydation des glucoses qui constitue le squelette de la molécule, et sa dégradation permet d'expliquer une telle diminution de la masse molaire.

*Influence sur l'adsorption*

L'influence de la réaction d'oxydation sur les masses molaires et la structure du polymère peut modifier ses propriétés physico-chimiques. Les propriétés d'adsorption du XgOx ont donc été contrôlée : la solution de XgOx et la suspension de NFC sont agitées pendant 1h. Les masses sèches équivalentes introduites sont de 0.3g de XgOx et 0.3g ou 0.9g de NFC selon l'étude. Différentes concentrations ont été étudiées. Après centrifugation à 11200 rpm à 10°C pendant 30 minutes, le surnageant est ôté puis le culot est redispersé dans l'eau déionisée. Après une seconde centrifugation dans les mêmes conditions le culot est placé à l'étuve puis pesé. La différence entre la masse obtenue et la masse sèche initiale de NFC nous donne la quantité de XgOx adsorbé.

La figure 3 montre l'évolution de la quantité de Xg adsorbé pour une concentration de 0,2% massique en solution, en fonction de son pourcentage d'oxydation, pour 2 proportions de nanofibrilles de cellulose différentes (rond : 1 pour 1 ; triangle : 1 pour 3). La capacité du Xg à s'adsorber n'est pas affectée jusqu'à l'approche des 30% d'oxydation. On observe ensuite une décroissance importante des propriétés d'adsorption, qui deviennent quasiment nulles au-delà des 50%. A un tel pourcentage d'oxydation, le squelette glucosidique de la chaîne responsable de l'adsorption du Xg commence à être oxydé, modifiant ainsi son comportement. La présence des aldéhydes et la rupture d'une liaison carbone-carbone vont notamment augmenter la flexibilité de la chaine et modifier sa capacité à former des interactions hydrophobes et des liaisons hydrogène. L'utilisation du XgOx doit donc se faire de préférence entre des pourcentages d'oxydation de 0 et 25 % environ, afin d'être sûr de conserver la capacité d'adsorption du produit.

**Exemple 4** :: Utilisation comme additif de renforcement

Des xyloglucanes oxydés ont été utilisés comme additifs de renforcement du papier, à la fois aux états secs et humides.

Différentes formulations ont été testées, avec différents DO, différentes concentrations, différentes sources de pâtes à papier et différentes masses molaires.

1. Variations des sources de cellulose

i. Films de NFC

Des films de NFC et XgOx ont été réalisés par casting : la suspension de NFC à 2,23% en masse est ajouté afin d'obtenir la quantité voulue, puis le xyloglucane en solution est ajouté et le volume total est ajusté à 50 ml avec de l'eau déionisée. Les masses finales sèches des films sont de 0,5 g, avec des proportions de Xg/XgOx de 0, 1, 5, 10 et 25 % en masse du film sec. Le mélange est agité 2h à température ambiante, puis versé dans une boite de Pétri. Le casting est réalisé sous hotte à température ambiante jusqu'à séchage complet. Les films sont ensuite testés en traction.

La figure 4 montre ainsi l'évolution des propriétés de films secs en fonction de la proportion en XgOx et pour différents pourcentages d'oxydation.

Le xyloglucane et le xyloglucane oxydé renforce les films de NFC à l'état sec de la même façon avec un gain d'environ 50 % en contrainte à la rupture, les proportions et le pourcentage d'oxydation ne montrant pas d'influence significative.

On reproduit ainsi la même expérience sur les films humides, après immersion 1h dans l'eau, les résultats sont montrés figure 5.

L'effet de renforcement est marqué pour les deux différents pourcentages d'oxydation, alors qu'il est nul pour le Xg non oxydé.

ii. Fibre de lin

Le rôle de l'additif a été également testé sur des fibres de lin. Des faisceaux techniques ont été trempés dans une solution de XgOx oxydé à 20% environ et concentré à 1% en masse (XgOx22 signifiant xyloglucane oxydé à un pourcentage de 22%. Ce référencement est utilisé dans les autres exemples par analogie). Après rinçage et séchage, ces fibres ont été testées en traction, tout d'abord à l'état sec (tableau 2).

*Tableau 2 : Propriétés mécaniques des fibres techniques traitées, les écarts types sont indiqués entre parenthèses.*

| | Contraintes à la rupture (MPa) | Module de Young (GPa) | $\sigma$/E |
|---|---|---|---|
| Fibres non traitées | 813 (270) | 58 (13) | 1,38 (0,21) |
| XgOx22 | 755 (157) | 55 (5,6) | 1,37 (0,24) |

On ne note pas de différence de propriété significative entre les fibres traitées ou non. En revanche, le tableau 3 présente les résultats obtenus sur fibres humides.

*Tableau 3 : Propriétés mécaniques des fibres techniques humides, les écarts types sont indiqués entre parenthèses.*

| | Contraintes Max (MPa) | Module de Young (GPa) | Deformation max (%) |
|---|---|---|---|
| Fibres non traitées | 159 (81) | 27 (8) | 0,60 (0,33) |
| XgOx22 | 375 (185) | 23 (9) | 1,28 (0,42) |

On constate une augmentation significative de la contrainte à la rupture des fibres, malgré les écarts-types importants.

iii. Pâtes à papier

Des échantillons de papier de type formette ont été réalisés à partir de différentes pâtes : une pâte Kraft, une sulfite et des linters de coton. Des suspensions à 2g/l de cellulose et de 0.01% en XGOX20 (XgOx20) ont été préparées, puis filtré et séché sur formette pour obtenir un papier d'environ 60 g/$m^2$. Les échantillons ont été testés en traction avant et après 48h d'immersion dans l'eau. Les résultats sont détaillés dans le tableau 4.

*Tableau 4: Effet de l'additif XGOX20 sur les papiers issus de différents types de pâtes.*

| | | Dry (MPa) | Wet (MPa) | Ratio Wet/Dry Ref• |
|---|---|---|---|---|
| Kraft | Ref | 22 | 0,05 | **10%** |
| | XGOX20 | 40 | 2,5 | |
| Sulfite | Ref | 6,15 | 0,15 | **20%** |
| | XGOX20 | 10,13 | 1,25 | |
| Coton | Ref | 4,7 | 0,12 | |
| | XGOX20 | 10,1 | 1,25 | **30%** |

On constate un renforcement significatif grâce au XGOX20 à l'état sec à hauteur d'environ 100% de la contrainte initiale. On note également un renforcement à l'état humide de 10 à 30% selon la nature de la pâte, dans ces conditions.

2. Effet des concentrations

Le XGOX20 est introduit directement dans la pâte à papier, avant mise en forme. Ainsi le XgOx va se fixer sur les fibres par adsorption. Différentes concentrations en additif dans la pâte ont été testées, et les propriétés des papiers réalisés comme suit sont détaillées dans le tableau 5 :

1 L de suspension fibreuse à 2g/L + 1L d'eau dans sont ajoutés dans un Büchner, contenant 3 papiers filtres empilés sur une toile nylon à blutter de porosité 215 µm et de 18,5 cm de diamètre. La filtration est réalisée sous le vide d'une trompe à eau, puis le papier obtenu est séché à Tamb (25°C) 24h puis à l'étuve à 60° pendant 1 nuit.
Solution Ref : pulpe Kraft 100% dans l'eau du robinet
0,001 XGOX20 : XgOx20 en solution à 0,001% dans la suspension de pulpe Kraft
0,01 XGOX20 : XgOx20 en solution à 0,01% dans la suspension de pulpe Kraft
0,5 XGOX20 : XgOx20 en solution à 0,5% dans la suspension de pulpe Kraft.

*Tableau 5 : Evolution de l'effet de l'additif XGOX20 en fonction de* sa *concentration massique dans la pâte à papier (Kraft). Les écart-types sont indiqués entre parenthèse*

| | | 0 % XGOX20 | 0,001 % XGOX20 | 0,01 % XGOX20 | 0,5 % XGOX20 |
|---|---|---|---|---|---|
| Contrainte ultime (MPa) | sec | 6,53 (1,2) | 12,76 (0,6) | 14,68 (2,5) | 18,80 (2,78) |
| | humide | 0,00 | 0,98 (0,1) | 1,25 (0,2) | 2,28 (0,3) |

On constate de très nets gain en contrainte à la rupture à la fois aux états secs et humides, et ce dès 0.001%

massique de XGOX20 dans la suspension fibreuse de départ (2 g/l). L'effet semble toutefois croissant avec la concentration.

3. Effet du pourcentage d'oxydation (DO)

Le xyloglucane a été utilisé comme additif pour différents pourcentage d'oxydation.

1 L de suspension fibreuse à 2g/L contenant 0.1% massique de XgOx + 1L d'eau dans sont ajoutés dans un Büchner, contenant 3 papiers filtres empilés sur une toile nylon à bluter de porosité 215 µm et de 18,5 cm de diamètre. La filtration est réalisée sous le vide d'une trompe à eau, puis le papier obtenu est séché à Tamb 24h puis à l'étuve à 60° pendant 1 nuit.

Le pourcentage d'oxydation va influencer la capacité d'adsorption d'une part, et la densité de réticulation d'autre part.

*Tableau 6 : influence du pourcentage d'oxydation du xyloglucane sur les propriétés mécaniques des papiers traités. Les écarts types sont indiqués entre parenthèses.*

| | | Ref | %Ox = 1% | %Ox = 12% | %Ox = 20% | %Ox = 35% | %Ox = 47% |
|---|---|---|---|---|---|---|---|
| Contrainte ultime (MPa) | sec | 6,53 (1,2) | 13,06 (1,9) | 13,9 (2,9) | 13,8 (1,6) | 8,3 (1,8) | 11,04 (2,7) |
| | humide | 0 | 0,012 (0,09) | 0,9 (0,09) | 1,48 (0,19) | 0,36 (0,13) | 0,54 (0,09) |

On note ainsi qu'à des très faible %Ox (1%), le produit s'adsorbe et vient renforcer le papier à l'état sec par le réseau de liaison H formé par la présence du xyloglucane. En revanche à l'état humide sec, aucun renforcement n'est observé, à cause de la disparition des liaisons H et de l'absence de liaisons covalentes de type hémiacétals. A des pourcentages d'oxydation moyens (10 <%Ox< 25), l'équilibre est optimal entre adsorption du produit et densité de réticulation. Au-delà de 25%, le squelette glycosidique va être oxydé, et la capacité d'adsorption diminue. Cela se traduit par une diminution des propriétés mécaniques à l'état sec et à l'état humide. Un certain pourcentage de renforcement est tout de même observé, explicable l'adsorption d'une fraction des chaines qui conservent une structure compatible avec l'adsorption, et par le dépôt du produit dans la masse lors du procédé de fabrication par filtration. Dans ce cas, la forte proportion de fonctions aldéhydes présentent sur les chaines permet une réticulation significative dont les effets sont traduits mécaniquement.

4. Conclusion

La synthèse du produit a été maitrisée, notamment dans le contrôle du pourcentage d'oxydation.

La caractérisation physico-chimique de l'adsorption montre la formation du complexe XgOx-cellulose.

Différentes applications ont démontré l'efficacité du produit sur divers substrats cellulosiques.

**Exemple 5 : sur-réticulation**

***i. Propriétés Mécaniques des films de NFC***

Les films de NFC contenant différentes proportions en XgOx subissent un post traitement dans une solution aqueuse de dihydrazide adipique. Après séchage, les films sont testés en traction. Les résultats présentés sur la figure 6 montre l'influence de la proportion massique en xyloglucane, XgO12 et XgO23 sur la contrainte ultime de films de NFC post traités.

Les films post-traités ont été testés après immersion dans l'eau. Les contraintes à la rupture des films humides post traités sont comparées figure 7 avec celles des films NFC-XgOx.

En milieu humide, le XgOx permet de maintenir la cohésion du film grâce à la formation d'hémiacétals. L'ajout de dihydrazide va renforcer encore les propriétés mécaniques, et ce de manière d'autant plus forte si le DO et la proportion de XgOx sont élevée. Ainsi, à 25% de XgOx23, le film présente une contrainte moyenne de 0,4 MPa, qui augmente jusqu'à 17MPa après post traitement, soit 40% de la valeur d'un film de NFC sec.

***ii. Propriétés Mécaniques des papiers***

L'effet de cette sur-réticulation est ensuite testé sur des papiers. Le chitosan, polymère aminé biosourcé, a été utilisé afin d'obtenir un système d'additifs 100% biosourcés.

- Papiers non pressés

Une première phase d'essai est réalisée sur des papiers conçus comme suit : 1 L de suspension de fibres Kraft à 2% massique sont préparé, avec les concentrations de XgOx 20 précisé dans le tableau ci-dessous. Juste avant filtration, le volume est porté à 2 L sous vive agitation, puis la suspension est filtrée sous vide. Une fois l'eau extraite, le vide est maintenu et une solution de Chitosan à 0.01% en masse est pulvérisée à l'aide d'un spray sur le gâteau. Les papiers obtenus sont ensuite séchés à température ambiante.

On obtient les propriétés mécaniques présentées dans le tableau 7.

*Tableau 7 : contraintes à la rupture des papiers additivés aux états sec et humide (écarts type sur 5 échantillons indiqués entre parenthèse) traités par imprégnation de chitosan*

| | sec (MPa) | humide(MPa) |
|---|---|---|
| Ref | 7,1 (0,82) | 0,1 (0,06) |
| 0,001% XgOx20 | 12,8 (0,6) | 1 (0,1) |
| 0,01% XgOx20 | 14,7 (2,5) | 1,25 (0,22) |
| 0,5% XgOx20 | 18,8 (2,82) | 2,28 (0,33) |
| 0,001% XgOx20 + Chitosan | 19,8 (2,5) | 2,3 (0,51) |
| 0,01% XgOx20 + Chitosan | 16,2 (3,48) | 3 (0,49) |
| 0,5% XgOx20 + Chitosan | 19,7 (3,7) | 4 (0,35) |

De la même façon, des papiers traités par le XgOx35 ont été sur-réticulés après séchage. Ainsi, en respectant le même protocole, les papiers ont été séchés après filtration, puis trempé dans une solution de chitosan à 0.01% en masse avant d'être de nouveau séchés. Les propriétés mécaniques sont décrites dans le tableau 8.

*Tableau 8 : contraintes à la rupture des papiers additivés aux états sec et humide (écarts type sur 5 échantillons indiqués entre parenthèse) post traité par le chitosan.*

| | $\sigma$(Mpa) sec | $\sigma$(Mpa) humide |
|---|---|---|
| ref | 6,9 (1,2) | 0,1 (0,02) |
| 0,1 % XgOx20 | 12 (1,9) | 1,9 (0,14) |
| 0,1 % XgOx20 + Chitosan | 10,3 (2,25) | 2,7 (0,62) |
| 0,01 % XgOx20 | 13,1 (0,18) | 1,6 (0,22) |
| 0,01 % XgOx20 + Chitosan | 11,6 (1,33) | 2,9 (0,33) |

- Papiers réalisés sur Formettes Franck

Des papiers additivés ont été réalisés sur formettes Franck, à partir de 1L de suspension fibreuse à 2g/l et à 0.01% massique en XgOx20. Une fois la filtration réalisée, une solution de chitosan à 0.01% en masse a été pulvérisé sur les gateaux de filtration à l'aide d'un spray avant le séchage sous vide à 90° pendant 7 min. Les résultats sont décrits dans le tableau 9.

*Tableau 9 : contraintes à la rupture des papiers additivés aux états sec et humide (écarts type sur 5 échantillons indiqués entre parenthèse) traité par pulvérisation de chitosan.*

| | Classic Paper | XgOx 20 | XgOx20 + Chitosan |
|---|---|---|---|
| sec | 20,1 (0,6) | 38,6 (1,9) | 37,2 (4,0) |
| humide | 0,09 (0,06) | 4,0 (0,07) | 6,73 (0,29) |

La sur-réticulation par le chitosan permet systématiquement, quel que soit le taux de XgOx initial ou le procédé de traitement, une augmentation très significative des propriétés à l'état humide.

**Exemple 6 Utilisation d'un autre polysaccharide oxydé**

Synthèse :

10 g de polymères sont dissouts dans 1L d'eau, sous vive agitation. Le périodate est ajouté puis la réaction est conduite 12h à température ambiante à l'abri de la lumière. On obtient alors une solution de polysaccharide oxydé à 1% en masse. Le tableau 10 décrit les conditions de stœchiométrie.

*Tableau 10*

| | Stoechiométrie (NaIO4/Polym) | Dénominatio n | Masse de polysaccharide ajoutée (9) | Masse de periodate ajoutée (9) |
|---|---|---|---|---|
| gomme de caroube (Locust bean gum) | 0,10 | LOx10 | 10,00 | 1,32 |
| | 0,19 | LOx20 | 10,43 | 2,64 |
| gomme de guar | 0,10 | GOx10 | 9,96 | 1,32 |
| | 0,20 | GOx20 | 10,12 | 2,64 |

La cellulose a été purifiée pour éviter les effets parallèles du périodate résiduel et pour pouvoir analyser les produits obtenus. Une dialyse a donc été réalisée jusqu'à obtenir une conductivité égale à celle de l'eau déionisée du laboratoire.
Après dialyse, les concentrations sont mesurées par taux de matière sèche. Les additifs seront ensuite utilisés tels quels.

Caractérisation Papier :

Les polysaccharides oxydés sont ajoutés dans une suspension fibreuse de pâte Kraft à 2g/l, afin d'atteindre une concentration en additif de 0.01% massique. Après 1h sous agitations, des formettes sont réalisées par filtration.
Les papiers obtenus sont testés en traction à l'état sec puis après 48h d'immersion dans l'eau déionisée. Les différents polysaccharides seront comparés au XGOX20 et à un papier de référence sans additifs dans le tableau 11 (ci-après).

Conclusion :

Dans les conditions de test, les performances des polysaccharides oxydés issus de la gomme de guar et de la gomme de caroube sont très éloignées de celle des du xyloglucane oxydé. Les différences sont flagrantes à la fois aux états sec et humide.

Tableau 11

| | | Papier ref | 0,01 % XGOX20 | 0,01% GOx10 | 0,01% GOx20 | 0,01% LOx10 | 0,01% LOx20 |
|---|---|---|---|---|---|---|---|
| Contrainte ultime (MPa) | sec | 6,53 (1,2) | 14,68 (2,5) | 9,60 (1,36) | 8,66 (0,95) | 8,85 (0,32) | 7,10 (1,01) |
| | humide | 0 | 1,25 (0,2) | 0,03 (0,02) | 0,06 (0,04) | 0,10 (0,06) | 0,14 (0,03) |

**Exemple 7 : test de fonctionnalisation par un colorant**

Pour montrer la réactivité des fonctions aldéhydes restant disponibles, un papier Kraft non additivé est réalisé comme suit : 1l de suspension à 2 g/l de fibre Kraft est filtré sous vide, puis séché à température ambiante.
Des papier additivés par XgOx20, XgOx44 et par le Guar Oxydé (GOx44) ou le Caroube oxydé (Cox44) oxydés comme dans le protocole précédent sont réalisés comme suit : 1l de suspension à 2 g/l de fibre Kraft contenant 0.1% ou 0.01 % massique de XgOx20 ou XgOx44 ou de GOx44 ou de Cox44 sont filtrés sous vide, puis séché à température ambiante.
1 échantillon de 1 $cm^2$ de chacun des papiers additivés ou non est prélevé, puis plongé dans une solution de 2,4-Dinitrophénylhydrazine (DNPH) préparée comme suit : 0,19813 de DNPH sont pesés puis dissout dans un mélange de 3

ml d'HCl à 37%, de 20 ml d'éthanol et de 20 ml d'eau, dans une fiole jaugée de 100 ml. Après ajout d'éthanol jusqu'au trait de jauge, on obtient une solution de DNPH à 0.01 mol/l.

Les échantillons sont laissés dans la solution de DNPH pendant 48h. Après un rinçage abondant, le papier non additivé présente une couleur jaune pâle alors que les papiers additivés présentent une coloration orange très marquée (particulièrement Cox44 0.1%, XgOx44 0.1 et 0.01%) témoignant du greffage de la DNPH sur les aldéhydes du polysaccharide oxydé présent dans le papier dépendant du dosage et de la nature de l'additif, selon la réaction suivante :

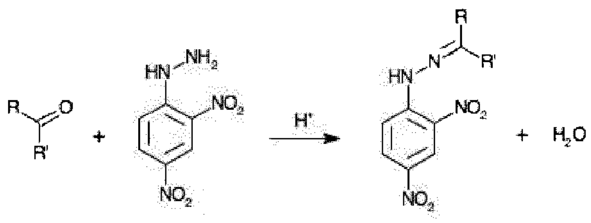

Sur une photographie (non représentée) on peut constater que le papier non additivé et le papier additivé après la mise en contact avec la solution de DNPH et le rinçage présentent des couleurs différentes avec un papier jaune pâle pour le papier non additivé et orange pour le papier additivé.

## Revendications

1. Composé comprenant une association d'au moins un polysaccharide adsorbé sur un matériau cellulosique, ledit polysaccharide comprenant au moins deux unités monosaccharides différentes, formant des premières et deuxièmes unités monosaccharides, lesdites deuxièmes unités monosaccharides étant ramifiées sur une chaine comprenant au moins lesdites premières unités monosaccharides, au moins certaines des deuxièmes unités monosaccharides étant non cycliques et porteuses de fonctions aldéhydes, lesdites fonctions aldéhydes formant possiblement des fonctions hémiacétales avec des fonctions hydroxy du matériau cellulosique, ledit polysaccharide étant en outre lié de manière covalente par une ou plusieurs molécules réactives, réagissant avec des fonctions aldéhydes du polysaccharide.

2. Composé selon la revendication 1, **caractérisé en ce que** le polysaccharide comprend une chaine avec des liaisons 1-4 glucanes, et de préférence des liaisons glucanes $\beta(1\rightarrow4)$.

3. Composé selon la revendication 1 ou 2, **caractérisé en ce que** le polysaccharide adsorbé comprend une chaîne de glucanes, une chaîne de mannanes et/ou une chaîne de xylanes.

4. Composé selon l'une quelconque des revendications 1 à 3, **caractérisé en ce que** les monosaccharides ramifiés non-cycliques sont des xyloses, galactoses, fucoses et/ou arabinoses, de préférence des ramifications de xylose $\alpha$ $(1\rightarrow6)$, où les monosaccharides ramifiés non cycliques sont des xyloses oxydés.

5. Composé selon l'une quelconque des revendications 1 à 4, **caractérisé en ce que** le polysaccharide adsorbé est choisi parmi le groupe consistant en un xyloglucane, un glucomannane, un mannane et un galactomannane.

6. Composé selon l'une quelconque des revendications 1 à 5, **caractérisé en ce que** le polysaccharide adsorbé est choisi parmi le groupe consistant en un xyloglucane de graine de tamarin (TXG), un xyloglucane de pois, un galactomannane à faible galactose, une gomme guar, une gomme tara, une gomme de casse (ou gomme cassia), une gomme de caroube et l'un quelconque de leurs mélanges.

7. Composé selon l'une quelconque des revendications 1 à 6, **caractérisé en ce que** le polysaccharide adsorbé est un xyloglucane.

8. Composé selon l'une quelconque des revendications 1 à 7, **caractérisé en ce que** le polysaccharide est oxydé par un periodate, et de préférence le métapériodate de sodium, et de préférence **en ce que** le polysaccharide présente un pourcentage d'oxydation supérieur à 0% et inférieur ou égal à 50%, et de préférence encore inférieur ou égal à 40%, et de préférence encore inférieur ou égal à 30%, exprimé en nombre d'unités saccharides oxydées sur le nombre total d'unités saccharidiques.

9. Composé selon l'une quelconque des revendications 1 à 8, **caractérisé en ce que** le polysaccharide est lié de manière covalente au matériau cellulosique par des fonctions hémiacétals entre des fonctions aldéhydes de monosaccharides ramifiés et des fonctions hydroxy du matériau cellulosique.

10. Composé selon l'une quelconque des revendications 1 à 9, **caractérisé en ce que** les molécules réactives sont sélectionnées dans le groupe comprenant des amines, polyamines, hydroxylamines, imines, hydrazide et l'une quelconque de leurs combinaisons.

11. Méthode pour lier de manière covalente un matériau cellulosique à un polysaccharide, ladite méthode comprenant l'adsorption d'un polysaccharide sur un matériau cellulosique, de préférence l'adsorption est réalisée avec le matériau cellulosique en milieux aqueux, pour former un composé selon l'une quelconque des revendications 1 à 10 et la réaction de fonctions aldéhyde du polysaccharide avec des fonctions hydroxy du matériau cellulosique pour former des fonctions hémiacétales, et ledit polysaccharide est lié de manière covalente au substrat cellulosique et mis à réagir avec une ou plusieurs molécules réactives, réagissant avec des fonctions aldéhydes du polysaccharide.

12. Méthode selon la revendication 11, **caractérisée en ce que** les molécules réactives sont sélectionnées dans le groupe comprenant des amines, polyamines, hydroxylamines, imines, hydrazide et l'une quelconque de leurs combinaisons.

13. Méthode selon la revendication 11 ou 12, **caractérisée en ce qu'**elle comprend préalablement à l'adsorption du polysaccharide sur le matériau cellulosique une étape d'oxydation d'un polysaccharide précurseur du polysaccharide adsorbable sur le matériau cellulosique, l'étape d'oxydation pouvant être contrôlée pour oxyder uniquement les ramifications du polysaccharide.

14. Méthode selon l'une quelconque des revendications 11 à 13, **caractérisée en ce que** le composé selon l'une quelconque des revendications 1 à 10 est mis en forme et séché sous forme de papiers, fibres, non tissés, autres.

15. Utilisation d'une ou plusieurs molécules réactives réagissant avec des fonctions aldéhydes du composé tel que défini selon l'une quelconques des revendication 1 à 10, pour apporter une nouvelle fonctionnalité au composé, par exemple antiseptique, coloration, et/ou augmenter les propriétés mécaniques du matériau ainsi formé, lesdites molécules réactives étant par exemple sélectionnées dans le groupe comprenant des amines, polyamines, hydroxylamines, imines, hydrazide et l'une quelconque de leurs combinaisons.

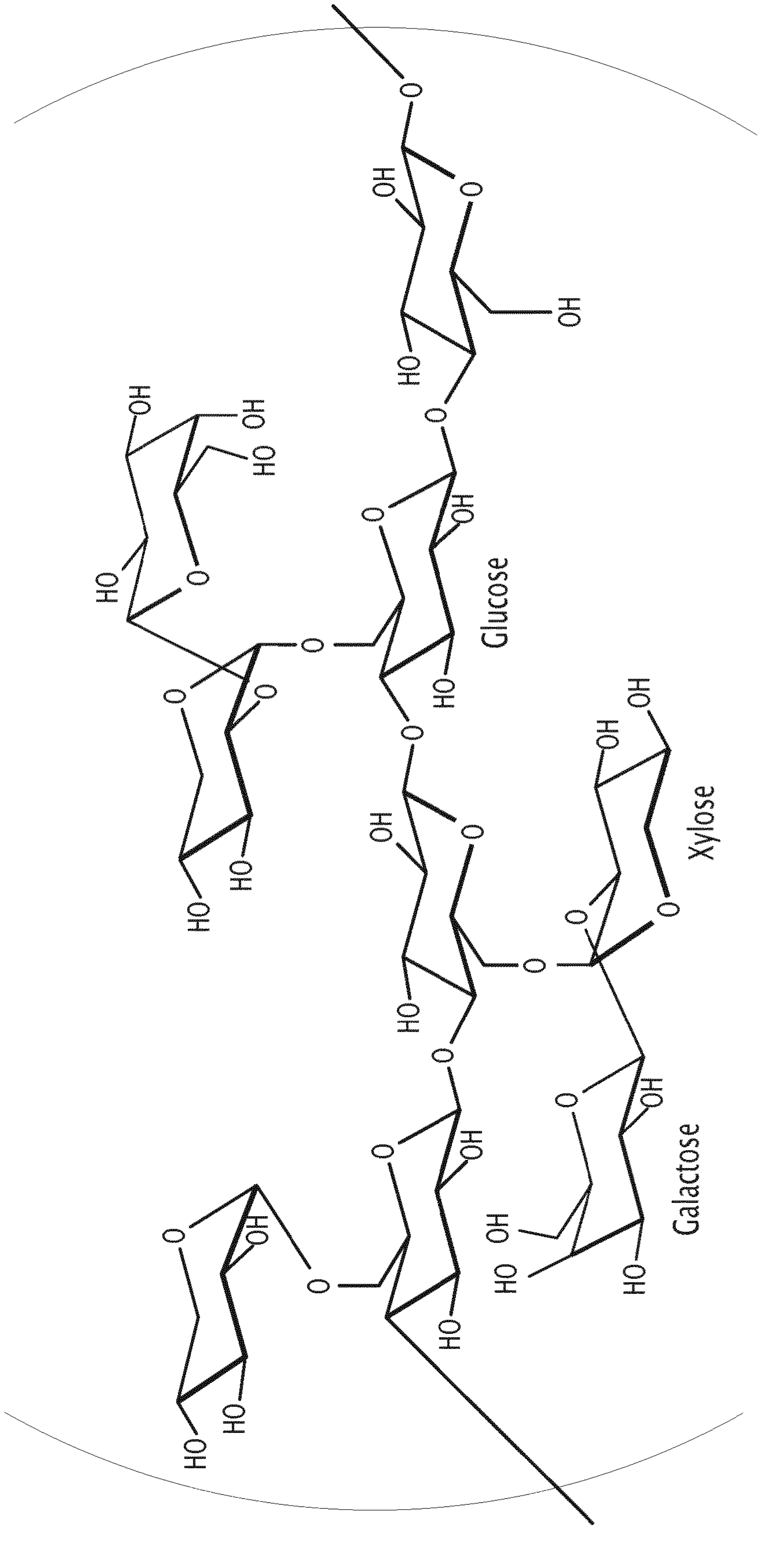


FIG.1

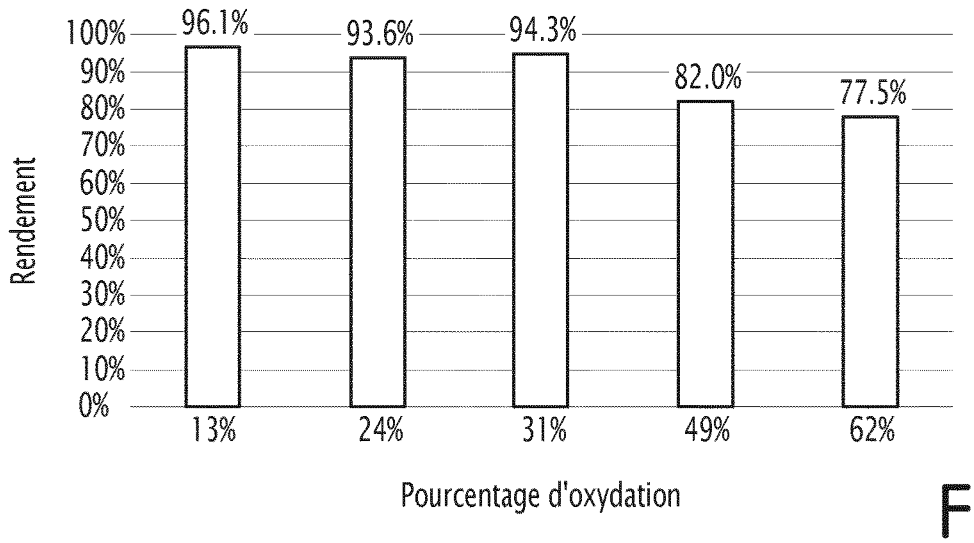


FIG.2

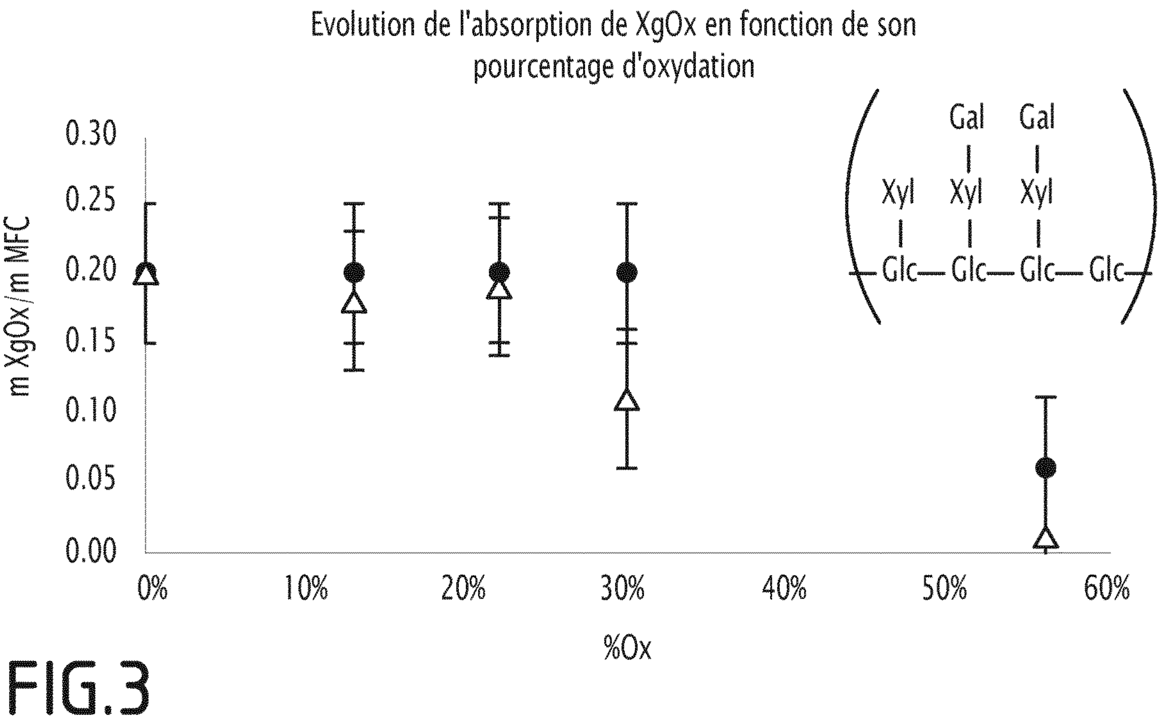


FIG.3

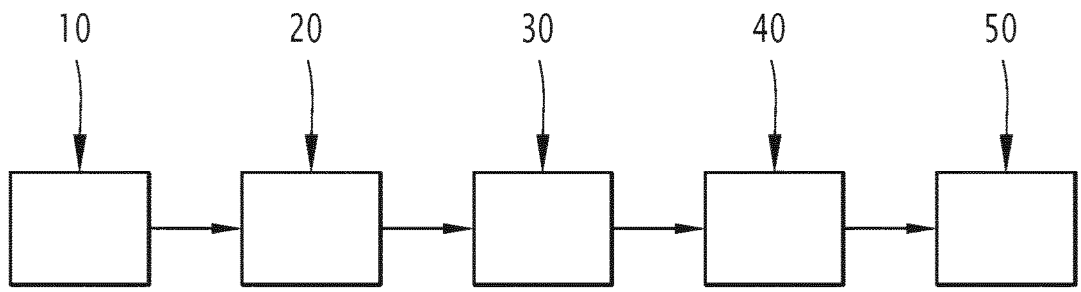


FIG.8

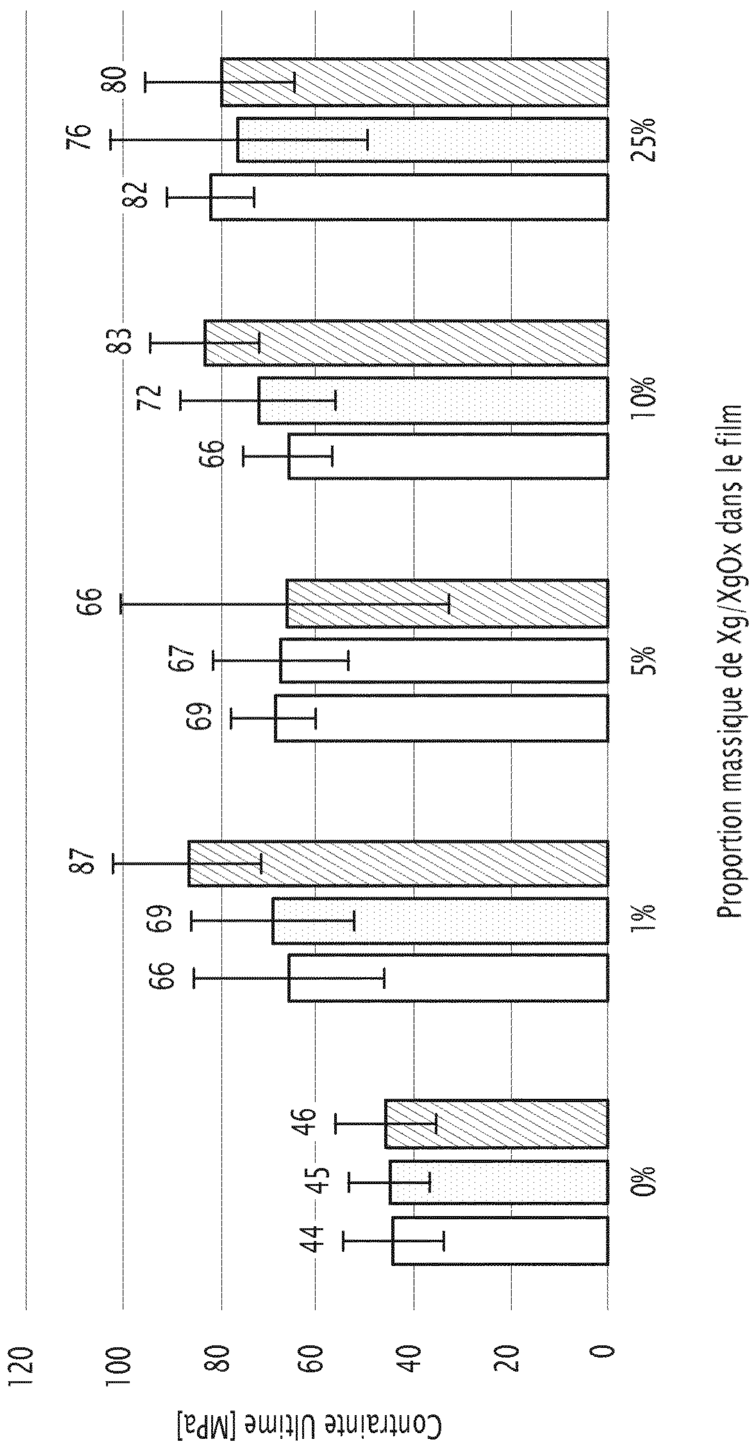
Contrainte Ultime [MPa]
0
20
40
60
80
100
120
44
45
46
66
69
87
69
67
66
66
72
83
82
76
80
0%
1%
5%
10%
25%
Proportion massique de Xg/XgOx dans le film

FIG.4

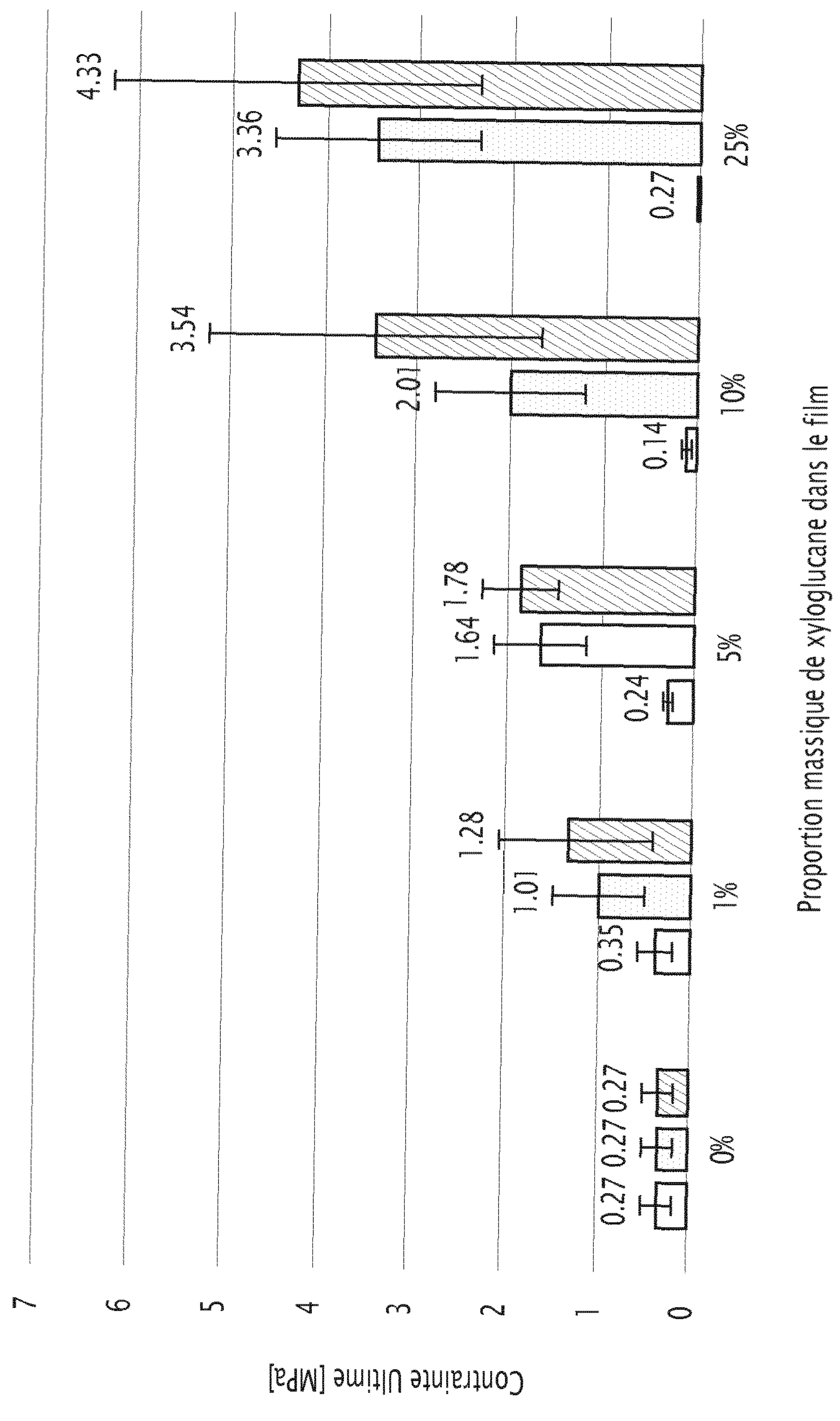

Contrainte Ultime [MPa]
0
1
2
3
4
5
6
7
0.27
0.27
0.27
0%
0.35
1.01
1.28
1%
0.24
1.64
1.78
5%
0.14
2.01
3.54
10%
0.27
3.36
4.33
25%
Proportion massique de xyloglucane dans le film


FIG.5

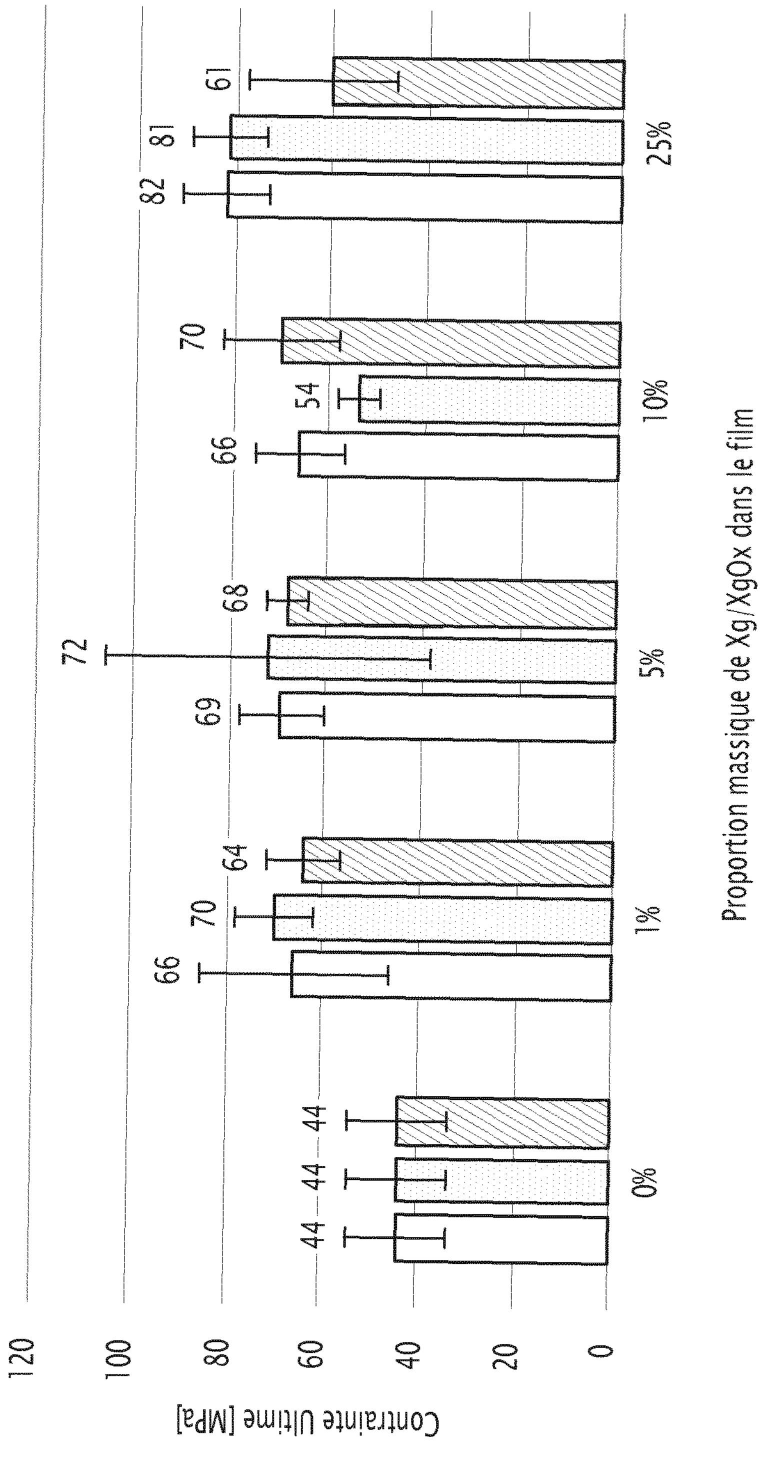
Contrainte Ultime [MPa]
0
20
40
60
80
100
120
44
44
44
0%
66
70
64
1%
69
72
68
5%
66
54
70
10%
82
81
61
25%
Proportion massique de Xg/XgOx dans le film

FIG.6

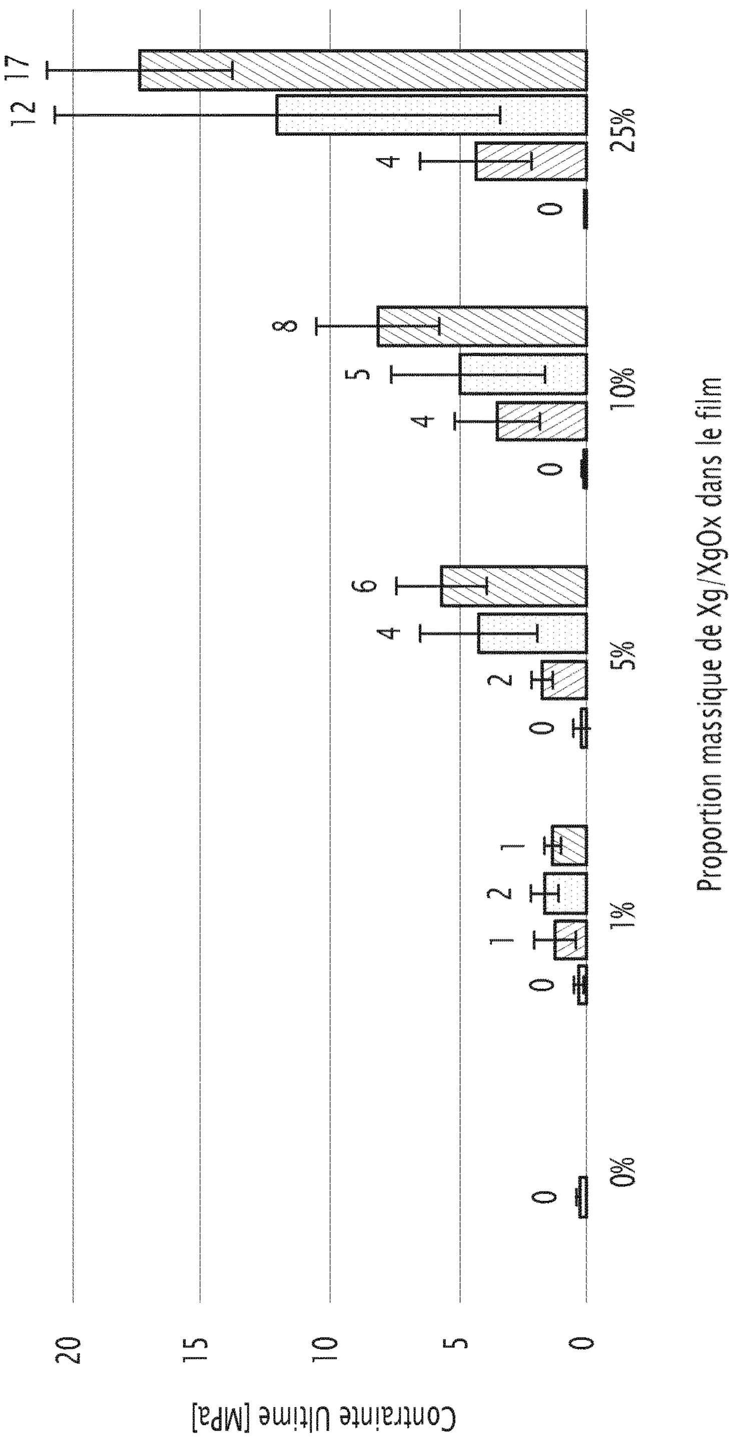
Contrainte Ultime [MPa]
0
5
10
15
20
0
0
1
2
1
0
2
4
6
0
4
5
8
0
4
12
17
0%
1%
5%
10%
25%
Proportion massique de Xg/XgOx dans le film

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3205125 A
- US 5554745 A